# EUROPEAN PATENT SPECIFICATION

(11) **EP 0 519 713 B1**
(45) Date of publication and mention of the grant of the patent: **19.08.1998**
(21) Application number: 92305570.1
(22) Date of filing: 17.06.1992
(51) Int. Cl.: G06K 9/20, G06K 9/22

(54) **Character input method and apparatus**
Verfahren und Gerät zur Zeicheneingabe
Procédé et appareil d'entrée de caractères

(30) Priority: 21.06.1991 JP 150045/91
(43) Date of publication of application: 23.12.1992
(73) Proprietor: CANON KABUSHIKI KAISHA, Ohta-ku Tokyo 146 (JP)
(72) Inventor: Matsubayashi, Kazuhiro, c/o Canon Kabushiki Kaisha, Ohta-ku, Tokyo (JP); Taniishi, Shinnosuke, c/o Canon Kabushiki Kaisha, Ohta-ku, Tokyo (JP); Tatsumi, Eisaku, c/o Canon Kabushiki Kaisha, Ohta-ku, Tokyo (JP); Mori, Shigeki, c/o Canon Kabushiki Kaisha, Ohta-ku, Tokyo (JP); Tanaka, Atsushi, c/o Canon Kabushiki Kaisha, Ohta-ku, Tokyo (JP)
(74) Representative: Beresford, Keith Denis Lewis

(56) References cited:
- EP-A- 0 114 249
- EP-A- 0 230 994
- DE-A- 3 325 811
- US-A- 3 643 069
- PATENT ABSTRACTS OF JAPAN vol. 011, no. 1144 (P-574)12 May 1987 & JP-A-61 281 383 (SANYO)
- PATENT ABSTRACTS OF JAPAN vol. 8, no. 183 (P-296)(1620) 23 August 1984 & JP-A-59 075 376 (OKI)

## Description

### BACKGROUND OF THE INVENTION

### 1. Field of the Invention:

The present invention relates to a character input method and apparatus which inputs characters and obtains the character codes corresponding to the inputted characters.

### 2. Description of the Related Prior Arts:

There is a conventional freehand character input apparatus which recognizes an inputted freehand character and displays the character on a coordinate input apparatus such as a tablet. In such an apparatus, in the case where an inputted freehand character is recognized, a list of recognition candidate characters corresponding to each heading to which a freehand character is inputted is designated in advance and a character recognition is performed on the basis of the list of recognition candidate characters. The inputted freehand character is recognized in a manner such that a plurality of candidate characters among the recognized candidate characters are displayed and the appropriate character among the displayed candidate characters is selected and designated. Furthermore, the following apparatus is also known. That is, to which region of the screen the position at which the freehand character has been input is discriminated, and the kind of candidate characters corresponding to that region is specified. Then, the plurality of specified candidate characters are displayed and the character is recognized.

However, the above-described method and apparatus has the following drawbacks. In the first case, since the list of recognition candidate characters is effective only when data is inputted into a certain heading, the list of candidate characters needs to be changed whenever the title of a heading is changed resulting in complexity of operation.

In the second case, since the region determination is performed on the basis of the position of the screen where the inputted freehand character is located, if the layout of document is changed, the designation of candidate characters needs to be changed. Therefore, whenever the document layout is changed, the recognition candidate characters corresponding to the region of the screen needs to be redesignated. Thus, the operation is considerably complicated.

The invention overcomes these problems.

In accordance with a first aspect of the present invention there is provided a character input and recognition apparatus as set out in claim 1.

In accordance with a second aspect of the invention there is provided a character input and recognition method as set out in claim 9.

Other features and advantages of the present invention will become apparent from the following description taken in conjunction with the accompanying drawings, in which like reference numbers designate the same or similar parts throughout the figures thereof.

### BRIEF DESCRIPTION OF THE DRAWINGS

Fig. 1 is a block diagram illustrating the functional construction of the freehand character input apparatus according to the present embodiment;
Fig. 2 is a block diagram illustrating the general block diagram of the freehand character input apparatus according to the present embodiment;
Fig. 3 is a diagram illustrating an example of the screen display which displays personal information in the freehand character input apparatus according to the present embodiment;
Fig. 4 is a diagram illustrating a case where the layout display shown in Fig. 3 has been changed;
Fig. 5 is a diagram illustrating an example of the screen display in order to select recognition candidates in unit of a list of character in the freehand character input apparatus according to the present embodiment;
Fig. 6 is a diagram illustrating an example of the display to select part of the alphabet characters and the Arabic numerals according to the present embodiment;
Fig. 7 is a flowchart illustrating the registration processing of the title recognition candidate table according to the present embodiment;
Fig. 8 is a diagram illustrating an example of the data construction of the title recognition candidate table according to the present embodiment; and
Fig. 9 is a flowchart illustrating the operation of freehand character input for the data or title according to the present embodiment.

### DESCRIPTION OF THE PREFERRED EMBODIMENTS

Preferred embodiments of the present invention will now be described in detail in accordance with the accompanying drawings.

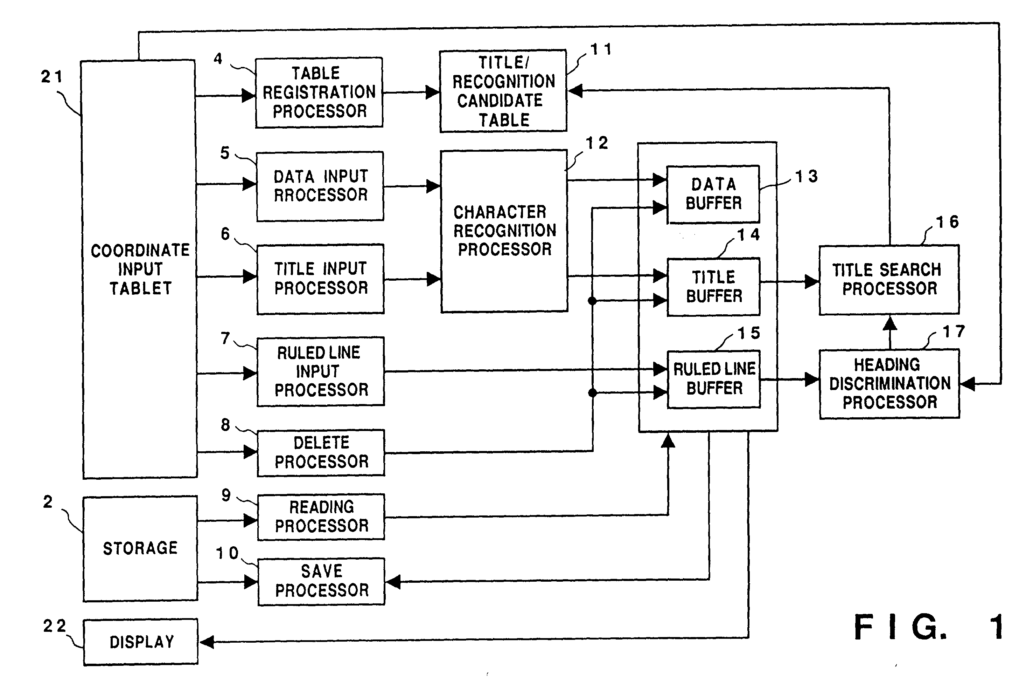

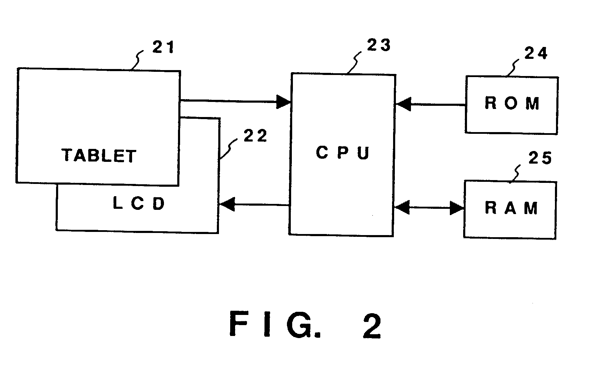

Fig. 1 is a block diagram illustrating the functional construction of the freehand character input apparatus according to the present embodiment. Fig. 2 is a block diagram illustrating the schematic hardware construction of the freehand character input apparatus according to the present embodiment.

In Fig. 2, the numeral 21 is a tablet for a coordinate input on which the operational face is formed by transparent resin. When a character is written on the tablet 21 by an input pen or the like, the freehand character is inputted. The numeral 22 is a display such as LCD which is placed under the tablet 21. The display 22 displays the outline of a freehand character which was inputted to the tablet 21 and developed to a character image (bit map) according to the font data of the ROM 24. The numeral 23 is a CPU for controlling the whole apparatus comprising a microprocessor and the like. The numeral 24 is a ROM which stores the control program of the CPU 23 and various kinds of character patterns (character font data) corresponding the character codes. The numeral 25 is a RAM which is utilized as a work region of the CPU 23 and stores various kinds of data including a string of character codes of the recognized characters and the buffers and flags (to be described later).

In Fig. 1, the numeral 21 is a coordinate input section comprising the tablet shown in Fig. 2 and an input pen and the numeral 22 is a display such as an LCD. The numerals 4 - 10, 16, and 17 refer to various types of processing sections which are described later. The numeral 12 is the character recognition processor which recognizes a freehand character inputted from the coordinate input section 21. The character recognition processor 12 includes the processing that recognizes the character inputted as document data, which has been inputted from the data input processor 5, and the processing that recognizes the title characters of a heading which are inputted from the title input processor 6. The numerals 13 - 15 refer to various kinds of buffers. The numeral 13 is the data buffer which stores the character code which was recognized in the character recognition processor 12, the numeral 14 is the title buffer, and the numeral 15 is the ruled line buffer which stores the ruled line data inputted from the ruled line input processor 7.

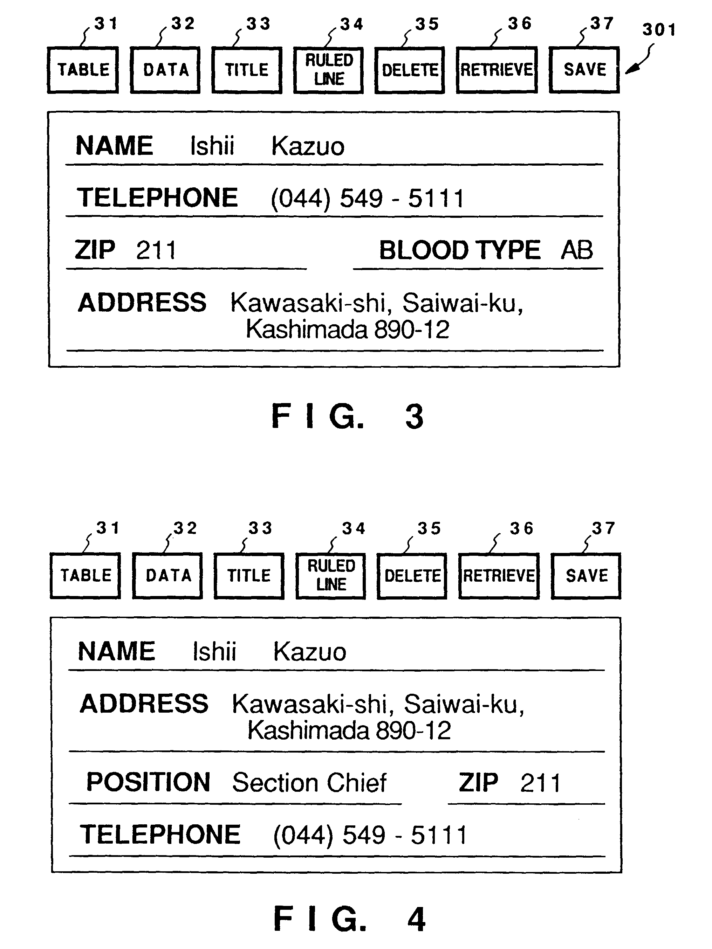

The processing of the freehand character input apparatus comprising the above-described construction is now described along with an example where personal information is inputted and displayed as shown in Fig. 3.

As shown in Fig. 3, the personal information for one page comprises the data such as "Ishii Kazuo", "(044) 549 - 5111", "211", "AB", and "Kawasaki-shi, Saiwai-ku, Kashimada 890-12", the heading title such as "NAME", "TELEPHONE", "ZIP", "BLOOD TYPE", and "ADDRESS", and the ruled line which divides each heading region. As apparent from Fig. 3, each heading comprises a ruled line, a string of characters indicating a heading title, and a string of data characters. Furthermore, each key of the framed region 301 such as "TABLE", "DATA", and "TITLE", which is located at the upper region of a screen, is a switch key of the freehand input mode. These keys are displayed on the LCD 22, and when the region corresponding to the display key is touched on the tablet 21, the corresponding mode is set. The input of character data in the data mode, title mode, or ruled line mode is inputted by freehand input from the coordinate input section 21 as shown in Fig. 1.

The function of each key of the framed region 301 is described.

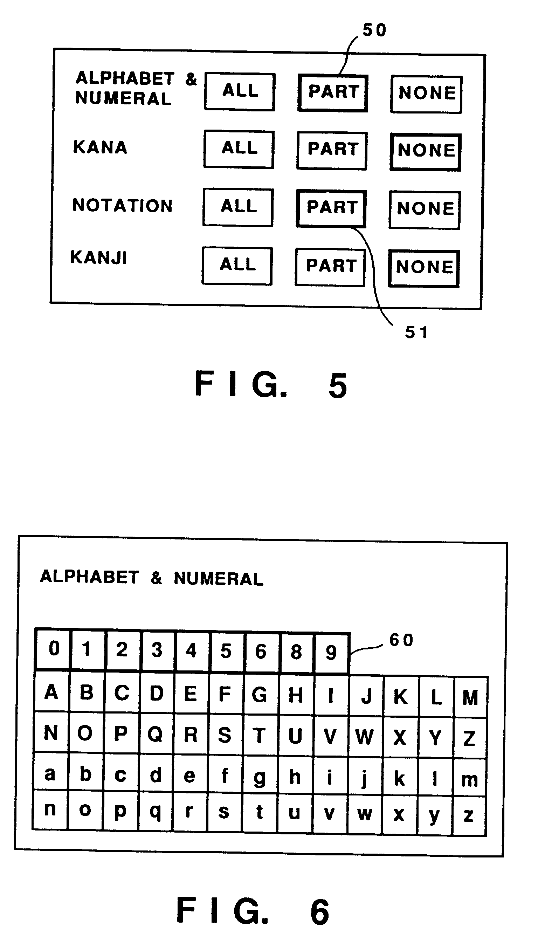

The numeral 31 is a table registration mode key and a table registration mode is set when the key 31 is depressed. In the coordinate input section 21 at the registration mode, a heading is selected by a pen or finger and the candidate characters for the heading are registered. The registration processing is later described in detail along with Figs. 5 and 6. The numeral 32 is a data mode key which drives the data input processor 5 when the data input mode is set by the key 32. The character data which is inputted from the coordinate input section 21 is processed as the data of the heading. The numeral 33 is a title mode key. When the title input mode is set by the key 33, the title input processor 6 is driven and the character data inputted from the coordinate input section 21 is processed as the title of the heading. Furthermore, the numeral 34 is the ruled line mode key. When the ruled line input mode is set by the key 34, the ruled line input processor 7 is driven and the ruled line is formed on the basis of a coordinate value inputted from the coordinate input section 21 and stored in the ruled line buffer 15.

When the data input processor 5 and the title input processor 6 are driven, the character recognition processor 12 is further driven and the character code corresponding to the inputted freehand character is obtained. In this way, the recognized character code and the coordinate value of the ruled line are stored in the data buffer 13, the title buffer 14, or the ruled line buffer 15 according to the mode at that time.

The numeral 35 is the delete mode key. When the key 35 is depressed, the delete mode is set and the inputted data, title, or ruled line is deleted from the corresponding buffer. The numeral 36 is the retrieve mode key. When the retrieve mode is set by the key 36, the personal information of one page is read out of the storage 2 to the corresponding buffer. That is, the data region is stored in the data buffer 13, the title region is stored in the title buffer 14, and the ruled line region is stored in the ruled line buffer 15. The numeral 37 is the save mode key. At the save mode, the data such as title data or ruled line data which is stored in each buffer is stored in the storage 2 as personal information for one page. The personal information in these buffers is displayed on the display 22 at real time.

In the example shown in Fig. 3, the five headings such as "NAME", "TELEPHONE", "ZIP", "BLOOD TYPE", and "ADDRESS" are processed as the personal information of one page. Among those, if the title of a heading is "TELEPHONE", the Arabic numerals "0" to "9", the parentheses "(" and ")", and the hyphen "-" can be used as the data. If the title is "ZIP", only the Arabic numerals and the hyphen can be used and, if the title is "BLOOD TYPE", only the three alphabet characters such as "A", "B", and "O" can be used as the data. Thus, if only the characters which can be used for each heading are set as recognition candidate characters, the possibility that an inputted freehand character is accurately recognized is considerably increased.

In the present embodiment, the title of each heading is paired to the recognition candidate characters in advance. Therefore, the title of the heading always corresponds to the recognition candidate characters as long as the heading title remains, even if the layout has been changed. For example, if the layout shown in Fig. 3 is changed to the layout shown in Fig. 4 resulting in the display position change, each heading is specified by the content of the title, therefore, each of the recognition candidates does not have to be registered.

The method to register the titles of each heading and a recognition candidate character table is described.

First, when the table registration mode key 31 is depressed and the table registration mode is set, the screen shown in Fig. 5 is displayed on the display 22. In this screen, whether or not all data, part of the data, or none of the data is to be registered is determined in every alphabetical characters, numerals, Japanese syllabaries (kana), notation, and Chinese characters (kanji).

The example in Fig. 5 illustrates the case where the recognition candidate characters in the heading "TELEPHONE" or "ZIP" are registered. In these headings, since only the part of the numerals (0 - 9), the hyphen "-", and parentheses "(" and ")" can be inputted, the kana and Chinese characters are totally excluded.

Fig. 6 is a diagram illustrating a screen, in the case where the "PART" is selected, to designate which character in the string of the alphabet characters and numerals should be registered as the recognition candidate. In this case, all string of the Alphabetical characters and numerals is displayed on the display 22 and the characters and numerals to be recognition candidates are registered out of these. In the present embodiment, only the numerals "0" to "9", the reference numeral 60, are registered. Similarly, as shown the reference numeral 51 in Fig. 5, in the case where a few of the notations are registered, all the notations are displayed and only the notations to be recognition candidates are registered.

When the table registration operation is completed in this way, a string of the characters for the designated heading and the heading are paired and registered in the title/recognition table 11.

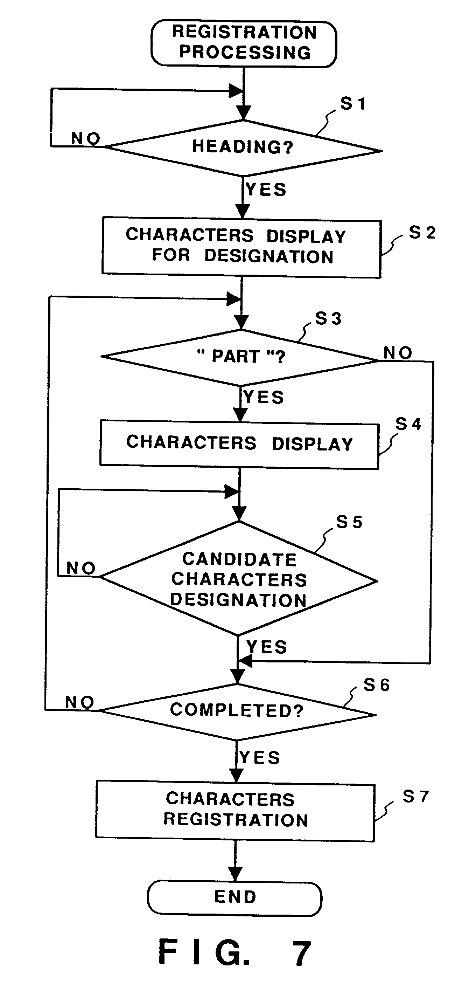

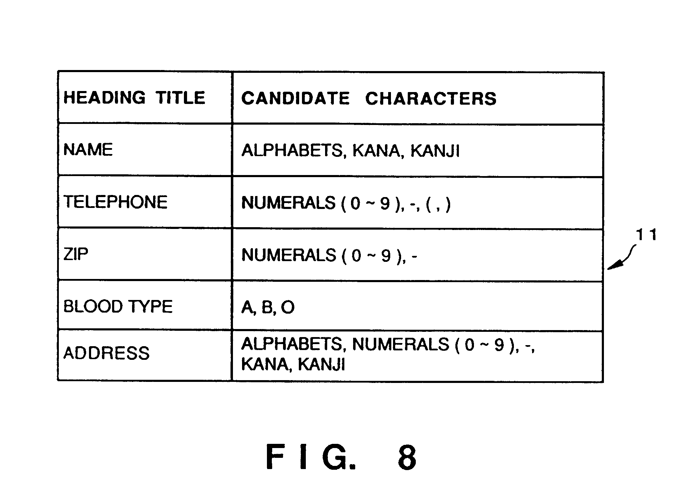

This registration processing is shown in the flowchart in Fig. 7 and the example of the data of the recognition candidate table 11 which was registered to the heading shown in Fig. 3 is shown in Fig. 8.

The processing in Fig. 7 is started when the table registration mode key 31 is depressed and whether or not a heading is selected on the display 22 is examined in step S1. In the case where the heading is designated, the process proceeds to step S2 where the screen for designating candidate characters are displayed on the display 22. Under this condition, one of "ALL", "PART", and "NONE" is selected to each heading of "ALPHABET & NUMERAL", "KANA", "NOTATION", and "KANJI" consecutively in a manner such that the region corresponding to the heading is depressed by the pen or the like. Then, in the case where the "PART" is selected in step S3, the step proceeds to step S4 where the designated characters are displayed on the display 22. The process then proceeds to step S5 where the candidate characters are selected out of the group of the displayed characters by depressing the region of the screen corresponding to a desired character. In the case of Fig. 6., the numerals from "0" to "9" are designated. Thus, when the designation of the candidate characters is completed for all headings, the process proceeds from step S6 to step S7 where the candidate characters and the headings are paired and registered in the table 11.

Fig. 8 illustrates the case where the heading and the candidate characters are paired and registered in the table 11.

The method that the ruled line is inputted in the case where the ruled line mode key 34 is depressed and the ruled line mode is set is described. To simplify the description, the ruled line is only to the horizontal direction. When the ruled line input mode is set by the ruled line mode key 34, the line can be drawn on the coordinate input section 21. At the beginning of the line which is the pen down point is set as (x₀, y₀) on the X- and Y-axises, and the end of the line which is the pen up point is set to as (x₁, y₀). The x- and y-axises of the beginning and end points of the ruled line are stored in the buffer 15.

The inputting of personal data and headings is described.

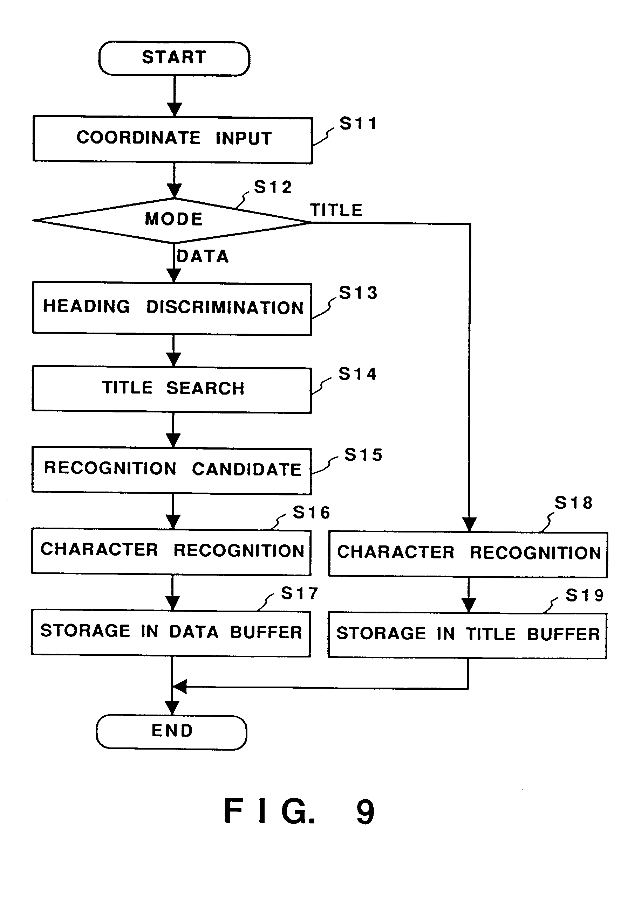

Fig. 9 is a flowchart illustrating the processing of the freehand character input on the tablet 21 of the coordinate input section 21.

In step S11, in the case where a freehand character is inputted from the coordinate input section 21 which is incorporated into the display 22, a string of coordinate which has been inputted from the tablet 21 is outputted from the coordinate input section 21. The process then proceeds to step S12 whether or not the current input mode is the data input mode or the heading input mode is examined. In the case of the data input mode, the process proceeds to step S13 where the relation between the inputted coordinates and the ruled line is discriminated by the heading discrimination processor 17 and to which heading the freehand input character belongs is determined. As shown in Fig. 3, since a ruled line corresponds to a heading at one on one, to which heading each inputted freehand character belongs can be determined.

That is, in the processing to determine the heading, the ruled lines are searched from the line in which the value on the y-axis is smallest (which is located at the upper side). In the case where the value on the y-axis of the inputted freehand character is smaller than that of the ruled line (the character is located above the ruled line) and the value of the x-axis of the inputted freehand character is located between the values of the left and right ends of the ruled line (the character is located on the ruled line), the inputted freehand character belongs to the heading corresponding to the ruled line. Thus, the ruled line corresponding to the freehand input character is searched.

Thus, the ruled line corresponding to the freehand input character is determined, the characters for the heading corresponding to the ruled line is searched from the title buffer 14. When the title of the heading is determined, the process proceeds to step S15 where the recognition candidates corresponding to the title are selected from the title/recognition candidate table 11. In this way, the recognition candidate character is determined in the character recognition processor 12 which is described later.

Then, the process proceeds to step S16 where the character recognition is performed on the basis of the string of the coordinate values which is inputted from the coordinate input section 21. The result of the recognition including the candidate characters is displayed on the display 22 and the character recognition process is completed when an operator selects a correct character among the candidate characters. In step S17, the recognized character code and the coordinate value of that character are stored in the data buffer 13.

On the other hand, in step S12, in the case of the title input mode to input the title of the heading, the process proceeds to step S18 where the character recognition is performed by setting all characters as recognition candidates and the result of the recognition is displayed on the display 22. Then, the appropriate character is selected out of these and the character is determined as the result of the recognition. The process, then, proceeds to step S19 where the character code of the recognized title and the coordinate values are stored in the title buffer 14.

In the present embodiment, characters among a group of the characters, which were inputted in the personal data input mode and belong to a certain heading, are arranged according to values of the y-axis. In the case where there are characters in which y-axis values are equal, the character in which x-axis value is smaller than the other comes first. This is the data characters and the characters which are inputted at the title input mode is similarly arranged. As a consequent, the characters are stored from the top to the bottom and the left to the right.

As described above, in the freehand character input apparatus according to the present embodiment, the ruled line which determines the position of the heading and the format including the title of the heading are formed and saved in advance. By registration of those with the title/recognition candidate table 11, in the case where personal data is inputted later, character recognition can be performed on the basis of the recognition candidate characters corresponding to the heading in a manner such that only the format is read and the data is inputted by freehand character. Therefore, it is effective for a patternized operation where a considerable amount of data is inputted at the single format.

Furthermore, whenever freehand characters are inputted one by one, the position of the heading to which the freehand character has been inputted is discriminated, and the title of the heading is searched, and then the recognition candidates corresponding to that heading are determined. Therefore, even if the layout of the display screen is changed, the recognition candidates corresponding to the heading do not have to be registered unless the title of the heading is changed. Therefore, it is effective for an indefinite operation, that is, where an layout of the document is often changed.

In the present embodiment, the ruled line is limited to only to the horizontal direction, however, the ruled line can be in any shape as long as an inputted freehand character corresponds to a certain ruled line and the line further corresponds to the title of a heading. Furthermore, the line can be an imaginative line rather than a visual line as long as headings are divided.

In the embodiment above, the example that a character which has been inputted by freehand is recognized has been described. However, the present invention is not restricted to this embodiment. It can be applied to the case that a character recognition of character image data read by a scanner or the like is performed.

In this case, the registration, storage, and retrieval of the candidate characters for recognition corresponding to the title can be performed in a similar way to those of the case that a freehand character is inputted and recognized.

These are the following three methods to discriminate a title from data in the case where character image data has been inputted:
(1) The position of a title in the character image data is set in advance. For example, in lateral lines, the title is set to the region of the left 5 cm. The characters which are located to the right of the set region are recognized as the data;
(2) The character size or font is respectively set for the title and data. The inputted characters are discriminated if they are a title or data by the difference of the size or font of the inputted characters; and
(3) The inputted character image data is once displayed on the screen and the title or the data is defined by a cursor or the like on the screen.

Thus, the titles and data can be discriminated and the character recognition can be performed in a similar way to that of the freehand input characters.

The present invention can be applied to a system comprising a plurality of apparatuses or a single apparatus. Furthermore, the present invention can be applied to a case of supplying the program which executes the processings to which the present invention has directed.

As described above, according to the present embodiment, since the region of the screen where the position of a character has been inputted belongs is discriminated and the recognition candidate characters in each region can be determined according to the specified information corresponding to the region, the possibility that the character recognition corresponding to the heading is accurately performed increases.

Furthermore, effective character recognition can be performed even if the layout of the position where the inputted character is changed by the registration of the recognition candidates corresponding to each heading.

As described above, according to the present invention, even if the position where an input character is changed, the character recognition is performed on the basis of the recognition candidates corresponding to the position. Therefore, if the layout is changed, the recognition candidates do not have to be set to the changed region.

## Claims

1. A character input apparatus, comprising:
input means (21) including an input unit having an input surface by means of which characters can be input; and
character recognition means (12) for recognizing characters input by using the input unit;
and further comprising:
region recognition means (17) for recognizing a region on the input surface in which characters have been input;
wherein said character recognition means is adapted to recognize characters in the region and assign a title to the region based on recognized characters, and is adapted to recognize further characters input in the region to which the title has been assigned on the basis of a limited set of expected characters related to the title.

2. Apparatus according to claim 1, and including means (301) whereby the apparatus can be set to operate in a plurality of modes including a plurality of freehand input modes.

3. Apparatus according to claim 2, wherein the modes include a ruled line mode whereby ruled line information can be input via said input means.

4. Apparatus according to claim 3, characterised in that a region on said input surface is defined by the input of ruled line information in said ruled line mode.

5. Apparatus according to claim 4, wherein said modes include a data mode and a title mode.

6. Apparatus according to any one of claims 1 to 5, and further comprising:
display means (22) having a display screen which is substantially the same size as the input surface and accommodated under the input surface, for displaying at least characters input by said input means and recognized characters.

7. Apparatus according to claim 6, wherein said character recognition means (12) is adapted to cause said display means (22) to display a plurality of candidate characters as a result of character recognition processing (S16), in the case where the plurality of candidate characters in the limited set of expected characters are present, and outputs the character (S17) which was selected among the plurality of candidate characters displayed by said display means as the recognition result.

8. Apparatus according to any one of claims 1 to 7, and further comprising candidate character designation means (4) for designating the limited set of expected characters corresponding to a title.

9. A character input method, comprising:
an input step (S11) of inputting characters by using an input unit having an input surface;
a recognition step of recognizing the characters input on the input surface;
and further comprising:
a region recognition step (S13) of recognizing a region on the input surface in which the characters are input;
wherein in said recognition step, characters input in said region are recognized and a title is assigned to the region based on said recognized characters, and after that further characters input in the region to which the title is assigned are recognized (S16) based on a limited set of expected characters related to the title.

10. A method according to claim 9, and further comprising:
a ruled line input step of inputting ruled line information.

11. A method according to claim 10, wherein a region on said input surface is defined by the ruled line information.

12. A method according to any one of claims 9 to 11, wherein a plurality of candidate characters are displayed (S16) in said character recognition step as a result of character recognition processing, and in the case where the plurality of candidate characters in the limited set of expected characters are present, the character (S17) which was selected among the displayed plurality of candidate characters is output as the recognition result.

13. A method according to any one of claims 9 to 12, and further comprising a step of:
a candidate character designation step (S3) of designating the limited set of expected characters corresponding to the specified title.

## Patentansprüche

1. Zeicheneingabevorrichtung mit
einer Eingabeeinrichtung (21), die eine Eingabeeinheit mit einer Eingabeoberfläche aufweist, mittels der Zeichen eingegeben werden können, und
einer Zeichenerkennungseinrichtung (12) zum Erkennen von unter Verwendung der Eingabeeinheit eingegebenen Zeichen und außerdem mit
einer Bereichserkennungseinrichtung (17) zum Erkennen eines Bereichs auf der Eingabeoberfläche, in dem Zeichen eingegeben wurden,
wobei die Zeichenerkennungseinrichtung zum Erkennen von Zeichen in dem Bereich und zum Zuweisen einer Bezeichnung zu dem Bereich beruhend auf erkannten Zeichen angepaßt ist und zum Erkennen weiterer Zeichen angepaßt ist, die in den Bereich eingegeben wurden, dem die Bezeichnung auf der Grundlage eines begrenzten Satzes von auf die Bezeichnung bezogenen, erwarteten Zeichen zugewiesen wurde.

2. Vorrichtung nach Anspruch 1, mit
einer Einrichtung (301), durch die die Vorrichtung zum Arbeiten in einer Vielzahl von Betriebsarten eingestellt werden kann, die eine Vielzahl von FreihandeingabebeLriebsarten umfassen.

3. Vorrichtung nach Anspruch 2, wobei
die betriebsarten eine Betriebsart für gerade Linien umfassen, wodurch Informationen für gerade Linien über die Eingabeeinrichtung eingegeben werden können.

4. Vorrichtung nach Anspruch 3,
dadurch gekennzeichnet, daß ein Bereich auf der Eingabeoberfläche durch die Eingabe von Informationen für gerade Linien in der Betriebsart für gerade Linien definiert ist.

5. Vorrichtung nach Anspruch 4, wobei
die Betriebsarten eine Datenbetriebsart und eine Bezeichnungsbetriebsart umfassen.

6. Vorrichtung nach einem der Ansprüche 1 bis 5 weiterhin mit
einer Anzeigeneinrichtung (22), die einen im wesentlichen dieselbe Größe wie die Eingabeoberfläche aufweisenden und unter der Eingabeoberfläche untergebrachten Anzeigenbildschirm zur Anzeige zumindest von durch die Eingabeeinrichtung eingegebenen Zeichen und von erkannten Zeichen aufweist.

7. Vorrichtung nach Anspruch 6, wobei
die Zeichenerkennungseinrichtung (12) zur Veranlassung angepaßt ist, daß die Anzeigeneinrichtung (22) eine Vielzahl von in Frage kommenden Zeichen als ein Ergebnis von einem Zeichenerkennungsvorgang (S16) in dem Fall anzeigt, bei dem die Vielzahl von in Frage kommenden Zeichen in dem begrenzten Satz von erwarteten Zeichen vorhanden sind, und das Zeichen ausgibt (S17), das unter der Vielzahl von durch die Anzeigeneinrichtung als das Erkennungsergebnis angezeigten in Frage kommenden Zeichen ausgewählt war.

8. Vorrichtung nach einem der Ansprüche 1 bis 7, und weiterhin mit
einer Bestimmungseinrichtung (4) für in Frage kommende Zeichen zur Bestimmung des begrenzten Satzes von erwarteten Zeichen entsprechend einer Bezeichnung.

9. Verfahren zur Eingabe von Zeichen mit
einem Eingabeschritt (S11) zum Eingeben von Zeichen unter Verwendung einer Eingabeeinheit, die eine Eingabeoberfläche aufweist,
einem Erkennungsschritt zum Erkennen der auf der Eingabeoberfläche eingegebenen Zeichen,
und weiter mit
einem Bereichserkennungsschritt (S13) zum Erkennen eines Bereichs auf der Eingabeoberfläche, in dem die Zeichen eingegeben werden,
wobei bei dem Erkennungsschritt in den Bereich eingegebene Zeichen erkannt werden und dem Bereich beruhend auf den erkannten Zeichen eine Bezeichnung zugewiesen wird, und danach weitere in den Bereich eingegebene Zeichen, dem die Bezeichnung zugewiesen wurde, beruhend auf einem begrenzten Satz von auf die Bezeichnung bezogenen, erwarteten Zeichen erkannt werden (S16).

10. Verfahren nach Anspruch 9 weiterhin mit
einem Eingabeschritt für gerade Linien zum Eingeben von Informationen für gerade Linien.

11. Verfahren nach Anspruch 10, wobei
ein Bereich auf der Eingabeoberfläche durch die Informationen für gerade Linien definiert wird.

12. Verfahren nach einem der Ansprüche 9 bis 11,
wobei eine Vielzahl von in Frage kommenden Zeichen bei dem Zeichenerkennungsschritt als Ergebnis eines Zeichenerkennungsvorgangs angezeigt wird (S16), und in dem Fall, bei dem die Vielzahl von in Frage kommenden Zeichen in dem begrenzten Satz von erwarteten Zeichen vorhanden sind, wird das Zeichen (S17), das unter der angezeigten Vielzahl von in Frage kommenden Zeichen ausgewählt wurde, als das Erkennungsergebnis ausgegeben.

13. Verfahren nach einem der Ansprüche 9 bis 12 weiterhin mit
einem Bestimmungsschritt (S3) für in Frage kommende Zeichen zum Bestimmen des begrenzten Satzes von erwarteten Zeichen entsprechend der bestimmten Bezeichnung.

## Revendications

1. Appareil d'entrée de caractères comprenant :
un moyen d'entrée (21) incluant un module d'entrée ayant une surface d'entrée au moyen de laquelle on peut entrer des caractères ;
et un moyen (12) de reconnaissance de caractères destiné à reconnaître des caractères entrés par l'utilisation du module d'entrée ;
et comprenant en outre :
un moyen de reconnaissance de zone (17) destiné à reconnaître une zone, sur la surface d'entrée, dans laquelle on a entré des caractères ;
dans lequel ledit moyen de reconnaissance de caractères est conçu pour reconnaître des caractères dans la zone et affecter un titre à la zone en se basant sur des caractères reconnus, et est apte à reconnaître d'autres caractères entrés dans la zone à laquelle le titre a été affecté sur la base d'un ensemble limité de caractères attendus liés au titre.

2. Appareil selon la revendication 1, et incluant un moyen (301) par lequel l'appareil peut être réglé pour fonctionner dans une pluralité de modes incluant une pluralité de modes d'entrée mains libres.

3. Appareil selon la revendication 2, dans lequel les modes comprennent un mode ligne réglée, permettant d'entrer de l'information de ligne réglée par l'intermédiaire dudit moyen d'entrée.

4. Appareil selon la revendication 3, caractérisé en ce qu'une zone, sur ladite surface d'entrée, est définie par l'entrée d'information de ligne réglée en mode ligne réglée.

5. Appareil selon la revendication 4, dans lequel lesdits modes comprennent un mode données et un mode titre.

6. Appareil selon l'une quelconque des revendications 1 à 5, et comprenant en outre :
un moyen d'affichage (22) comportant un écran d'affichage qui est sensiblement de la même taille que la surface d'entrée et logé sous la surface d'entrée, destiné à afficher au moins des caractères entrés par ledit moyen d'entrée et des caractères reconnus.

7. Appareil selon la revendication 6, dans lequel ledit moyen (12) de reconnaissance de caractères est apte à faire que ledit moyen (22) d'affichage affiche une pluralité de caractères candidats, comme résultat d'un traitement (S16) de reconnaissance de caractères, dans le cas où la pluralité de caractères candidats se trouve dans l'ensemble limité de caractères attendus, et sort le caractère (S17) qui a été choisi parmi la pluralité de caractères candidats affichés par ledit moyen d'affichage, comme résultat de reconnaissance.

8. Appareil selon l'une quelconque des revendications 1 à 7, et comprenant en outre un moyen (4) de désignation de caractères candidats destiné à désigner l'ensemble limité de caractères attendus correspondant à un titre.

9. Procédé d'entrée de caractères, comprenant :
une étape d'entrée (S11) destinée à entrer des caractères en utilisant un module d'entrée comportant une surface d'entrée ;
une étape de reconnaissance destinée à reconnaître les caractères entrés sur la surface d'entrée ;
et comprenant en outre :
une étape (S13) de reconnaissance de zone, destinée à reconnaître une zone, sur la surface d'entrée, dans laquelle les caractères sont entrés ;
dans lequel, dans ladite étape de reconnaissance, on reconnaît des caractères entrés dans ladite zone et l'on affecte un titre à la zone en se basant sur lesdits caractères reconnus, et après cela, on reconnaît (S16) des caractères supplémentaires entrés dans la zone à laquelle le titre est affecté, en se basant sur un ensemble limité de caractères attendus liés au titre.

10. Procédé selon la revendication 9, et comprenant en outre une étape d'entrée de ligne réglée destinée à entrer de l'information de ligne réglée.

11. Procédé selon la revendication 10, dans lequel on définit une zone sur ladite surface d'entrée par l'information de ligne réglée.

12. Procédé selon l'une quelconque des revendications 9 à 11, dans lequel on affiche (S16) une pluralité de caractères candidats, dans ladite étape de reconnaissance de caractères, comme résultat de traitement de reconnaissance de caractères, et dans le cas où la pluralité de caractères candidats se trouve dans l'ensemble limité de caractères attendus, on sort, comme résultat de reconnaissance, le caractère (S17) qui a été choisi parmi la pluralité affichée de caractères candidats.

13. Procédé selon l'une quelconque des revendications 9 à 12, et comprenant en outre :
une étape (S3) de désignation de caractères candidats, destinée à désigner l'ensemble limité de caractères attendus correspondant au titre spécifié.
